# EUROPEAN PATENT SPECIFICATION

(11) **EP 1 267 155 B1**
(45) Date of publication and mention of the grant of the patent: **08.03.2006**
(21) Application number: 02011872.5
(22) Date of filing: 28.05.2002
(51) Int. Cl.: G01N 21/88, G01N 21/89

(54) **Method for otpically inspecting blister packages**
Verfahren zur optischen Kontrolle von Blisterverpackungen
Procede pour l'inspection optique des emballages du type blister

(30) Priority: 12.06.2001 DE 10128324
(43) Date of publication of application: 18.12.2002
(73) Proprietor: Panasonic Electric Works Europe AG, 83601 Holzkirchen (DE)
(72) Inventor: Medernach, Christophe, 6330 Cham (CH)
(74) Representative: Strehl Schübel-Hopf & Partner

(56) References cited:
- EP-A- 0 634 892
- DE-A- 3 428 364
- DE-A- 3 622 112
- DE-A- 4 331 772
- DE-A- 19 520 846
- DE-A- 19 757 230
- DE-U- 29 706 234
- US-A- 5 640 237
- US-B1- 6 201 602

## Description

Optical inspection by means of image recognition has been adopted in many areas of industrial manufacture and quality control. The object to be inspected is imaged by a CCD camera the output signal of which is evaluated by comparison with a given pattern. If the image deviates from the given pattern, the object under inspection is judged as faulty.

Blister packages containing pharmaceuticals are also inspected in this manner to verify their proper filling. Also produced are packages which contain a plurality of different pharmaceuticals in a unit, the pharmaceuticals usually differing in shape and/or colour in accordance with the regime in which they are to be administered over a given period, such as a week. In complicated cases, such blister packages may have a size up to that of a DINA4 sheet. It is necessary to verify the correct presence and position of each pharmaceutical in the respective blister pocket, to measure its size, and to detect any pill fragments or other foreign matter which may be present inside or outside a blister pocket.

In the optical inspection of this type of blister packages, difficulties are caused by the unavoidable unevenness of the blister sheet, which is provided with pockets for receiving the individual pharmaceuticals, and by the reflections resulting therefrom. A further problem resides in the varying and sometimes small contrast between the individual pharmaceutical tablets, pills or capsules and the blister pockets. Polarisation effects on the sheet surfaces may also impair the accuracy of the image detection. These problems are particularly severe if the sheet provided with the recesses or pockets consists of aluminium.

High quality illumination is essential for the contents of blister packages to be imaged and evaluated as accurately as possible. What matters is a diffuse illumination that is as uniform as possible in order to avoid the above-mentioned reflections and other local disturbances; this goal has been achieved only insufficiently with conventional light sources. Even where two-dimensional arrays of fluorescent tubes have been used, reflections and non-uniformities occur which impair the reliability of the image detection.

An apparatus for optically inspecting is known from EP 0 634 892 A. One form of the know apparatus uses light emitting capacitors, so-called LECs for illumination. Other arrangements which are intended for the inspection of blister packages but do not employ LECs are described in DE 4 331 772 C and in DE 3 428 364.

LECs are known per se; see DE 297 06 234 U, DE 195 20 846 A and DE 197 57 230 A. They essentially consist of two electrodes one of which is light transmissive and which sandwich a dielectric that contains light emitting crystals. By applying an AC voltage to the electrodes, the crystals are excited to luminescence.

LECs of this type have been mostly used in instrument panels, e.g. in aircrafts and cars, background illuminations of keyboards, and safety markings. In the known applications, it is important to provide a surface which is itself light-emitting or has an illuminated background in order to be perceived by an observer; compare DE 197 57 230 A.

US 5,690,417 A discloses a surface illuminator in which a plurality of light emitting diodes are oriented and controllable so as to illuminate points of a workplace.

It is an object of the invention to render the optical inspection of objects, particularly of blister packages, more reliable.

This object is met by the invention defined in claim 1.

The use of LECs in the apparatus suitable to perform the inventive method of optically inspecting the contents of blister packages, herein described is intended not to create a bright surface visible to an observer but to illuminate an object diffusely from all sides with a light density that is as uniform as possible, to permit imaging of the object by a camera. It has been found that the LECs are specifically suited for this purpose as they generate a uniform diffuse illumination which could not be obtained with conventional lighting means.

To form the chamber suitable to perform the inventive method of optically inspecting the contents of blister packages, the LECs are preferably in the form of sheets which are attached, such as by an adhesive, to the interior walls of the chamber.

For excluding interfering ambient light, the chamber is preferably closed and provided with LECs at substantially all its interior walls.

For the continuous inspection of objects (blister packages) during manufacture, it is advantageous to shape the chamber of the illumination device suitable to perform the inventive method of optically inspecting the contents of blister packages in such a way that its lower part permits the continuous passage of objects to be inspected.

An embodiment suitable to perform the inventive method of optically inspecting the contents of blister packages will now be explained with reference to the drawing, in which
Fig. 1 shows an example of a blister package filled with pharmaceuticals, for inspection by means of image processing;
Fig. 2 is a schematic representation of a packaging line including a plurality of filling and inspection stations;
Fig. 3 is a schematic representation of an individual inspection station; and
Fig. 4 is a schematic cross-section showing the structure of an LEC sheet.

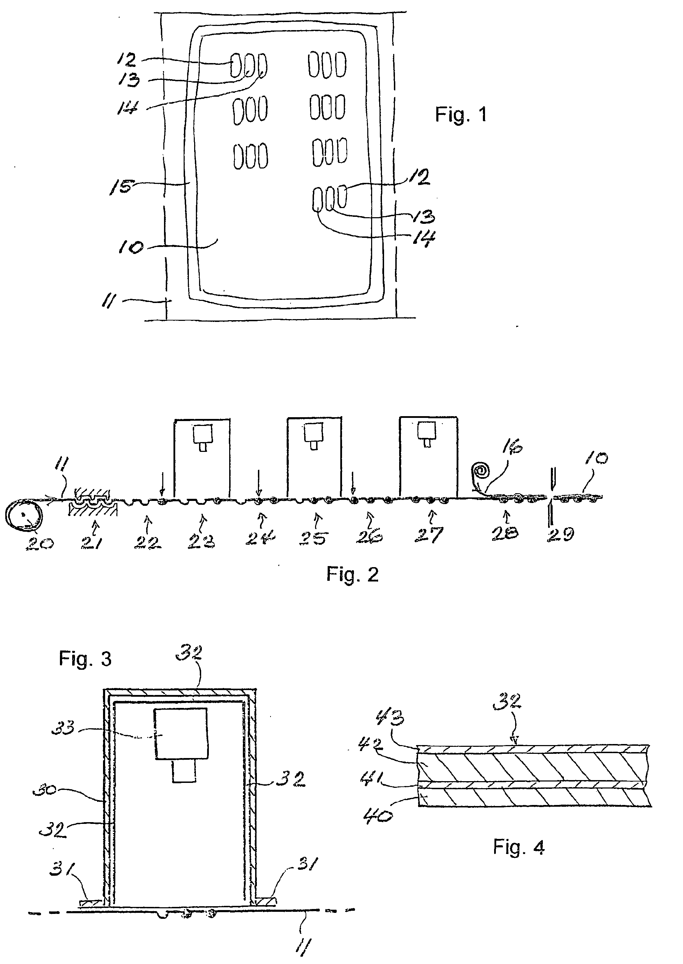

In the example shown in Fig. 1, a blister package **10** consists of an aluminium sheet **11** in which recesses or pockets **12, 13, 14** are formed by cold deformation to receive pharmaceuticals which, in the example shown, are in the form of capsules. Seven groups each containing three juxtaposed pockets are provided in accordance with a week's dose. The three pockets **12, 13, 14** of each group serve to receive three different pharmaceuticals.

The arrangement is surrounded by a stamped rectangular boarder region **15.** Upon complete filling, a cover sheet **16,** which is shown in Fig. 2 and consists also of aluminium, is welded to the boarder region **15.**

In the packaging line schematically shown in Fig. 2, the aluminium sheet **11** is withdrawn from a feed roller **20** and passes sequentially through the following stations:
- a stamping station **21** in which the pharmaceutical receiving pockets **12, 13, 14** shown in Fig. 1 and the boarder region **15** of the individual unit package **10** are stamped into the sheet **11;**
- a first filling station **22** in which pharmaceutical capsules are placed in the respective left-hand pocket **12** of each of the seven groups (by feed means not shown);
- a first inspection station **23** in which the proper filling of the pockets **12** is detected;
- a second filling station **24** in which a second pharmaceutical is filled into the respective pockets **13;**
- a second inspection station **25** in which the proper filling of the pockets **13** is detected;
- a third filling station **26** for filling the third pockets **14;**
- a third inspection station **27** for inspecting the third pockets **14;**
- a sealing station **28** in which the cover sheet **16** is applied and welded to the boarder region **15;** and
- a separating station **29** in which the band of welded sheets with the pharmaceuticals disposed therebetween is cut between the boarder regions **15** of adjacent unit packages **10.**

Referring to Fig. 3, each of the three inspection stations **23, 25** and **27** indicated in Fig. 2 includes a substantial parallelepipedic chamber **30.** The base of the chamber **30** corresponds to the area of the largest blister package to be inspected, which may be as large as a DINA4 sheet.

The open base of the chamber or hood **30** is disposed as closely as possible above the blister sheet **11** moving past this location. It is important for the spacing between the lower edge of the chamber **30** and the sheet **11** to be as small as possible to prevent the entry of ambient light. If necessary, a shade **31** extending closely above the sheet **11** may be additionally provided at this location.

At least the four lateral walls, preferably also the ceiling, of the chamber **30** have their inner sides provided with electroluminescent capacitors (LECs) **32.** The LECs **32** are in the form of sheets which can be cut or adapted so that they substantially cover all of the interior surfaces of the chamber **30.**

A CCD camera **33** is disposed inside the camera **30** and directed toward the blister sheet **11.** The output signal of the camera is compared with a given pattern by means of an evaluation unit (not shown). If the image being taken does not correspond to the stored pattern, a signal is produced to indicate a improper filling of the respective unit package **10.**

This signal causes the faulty unit package **10** to be rejected at a location downstream of the separating station **29.** If the fault is detected at the first or second inspection station **23, 25,** the output signal of the evaluation unit may be used to stop the filling of this unit package **10** with further pharmaceuticals.

In accordance with Fig. 4, the LEC sheet **32** includes a substrate **40,** a rear electrode **41,** an electroluminescent layer **42** and a transparent electrode **43,** which faces the interior of the chamber **30.** By applying an AC voltage (at a frequency of up to 3 kHz) between the electrodes **41** and **43,** the light emitting layer **42** is excited to luminescence. A uniformly and diffusely light emitting surface with high uniformity (maximum variance ± 2%) is thus created.

Since all interior walls of the chamber **30** emit light throughout their entire surfaces, a light density of e.g., 65 cd/m² generated by the LEC sheet **32** suffices to illuminate the blister package **10** in a manner sufficient for image processing. The light intensity can be controlled by varying the applied AC voltage. Further advantageous is the fact that the light is generated at very low power and thus virtually without heat so that the chamber **30** requires no cooling in spite of the fact that it is essentially completely closed. An entire inspection station will typically consume 1.5 W. Further favourable is the ability of LEC sheets to enable provide the creation of light of practically any colour. White-pink light has been found particularly suitable for the present application.

The LECs provided on the lateral walls and bottom of the chamber 30 can be individually controlled as to their light intensity, depending on the particular application and on the type of blister packages to be inspected. A central control unit may be provided for this purpose.

In the above embodiment, the lower sheet **11** of the blister package is formed of aluminium which is specifically problematic for image recognition due to its high reflectivity. Alternatively, the sheet may be made of PVC or other plastics material. If the lower sheet is made of transparent plastics, the illumination may be done with transmitted light. In this case, the blister sheet within each inspection station moves over a carrier surface which confines the lower side of the chamber and which is provided with an LEC sheet or is itself constituted by an LED.

The low power requirement and fast response of the LECs enable very fast switching between transmission and reflection illumination where blister packages having transparent and opaque lower sheets are inspected alternatingly. In this case, the bottom LEC (and possibly also those provided on the side walls are switched on and off at short intervals. For the same reason, the device has no warm-up phase; it is immediately ready after start.

## Claims

1. A method of optically inspecting the contents of blister packages by image recognition, including placing the blister packages in a substantially parallelepipedic illumination chamber **(30)** the lateral interior walls of which are provided with a light source **(32)** for illuminating the packages, imaging the blister packages and evaluating the image,
providing each lateral interior wall of the illumination chamber **(30)** with a controllable light emitting capacitor **(32),** and
individually controlling the light intensity of each light emitting capacitor **(32).**

2. The method of claim 1, wherein light emitting capacitors **(32)** are disposed on the interior walls of the chamber **(30)** in the form of sheets.

3. The method of claim 1, wherein the walls are substantially covered by light emitting capacitors **(32).**

4. The method of any preceding claim, wherein the bottom of the chamber (30) is provided with a light emitting capacitor **(32).**

5. The method of any preceding claim, wherein packages **(10)** are continuously passed through a lower portion of the chamber **(30).**

6. The method of claim 5, wherein the packages **(10)** are conveyed from a filling station **(22, 24, 26)** along a path along which a plurality of inspection stations **(23, 25, 27)** each including an illumination chamber **(30)** are disposed.

## Patentansprüche

1. Verfahren zum optischen Kontrollieren des Inhalts von Blisterpackungen mittels Bilderkennung, wobei
die Blisterpackungen in eine im wesentlichen quaderförmige Beleuchtungskammer **(30)** gebracht werden, deren seitliche Innenwände mit einer Lichtquelle **(32)** zum Beleuchten der Packungen versehen sind,
von den Blisterpackungen ein Bild aufgenommen und dieses ausgewertet wird,
jede seitliche Innenwand der Beleuchtungskammer **(30)** mit einem steuerbaren Leuchtkondensator **(32)** versehen wird, und
die Lichtintensität jedes Leuchtkondensators **(32)** individuell gesteuert wird.

2. Verfahren nach Anspruch 1, wobei Leuchtkondensatoren **(32)** an den Innenwänden der Kammer **(30)** in Folienform angeordnet sind.

3. Verfahren nach Anspruch 1, wobei die Wände mit Leuchtkondensatoren **(32)** im wesentlichen bedeckt sind.

4. Verfahren nach einem der vorhergehenden Ansprüche, wobei der Boden der Kammer **(30)** mit einem Leuchtkondensator **(32)** versehen ist.

5. Verfahren nach einem der vorhergehenden Ansprüche, wobei Packungen **(10)** kontinuierlich durch einen unteren Teil der Kammer **(30)** bewegt werden.

6. Verfahren nach Anspruch 5, wobei die Packungen **(10)** von einer Füllstation **(22, 24, 26)** längs einer Bahn bewegt werden, an der mehrere Kontrollstationen **(23, 25, 27)** mit jeweils einer Beleuchtungskammer **(30)** angeordnet sind.

## Revendications

1. Procédé d'examen optique du contenu d'emballages-coques par reconnaissance d'image, comprenant les étapes consistant à
placer les emballages-coques dans une chambre d'éclairement sensiblement parallélépipédique (30) dont les parois latérales intérieures sont munies d'une source de lumière (32) afin d'éclairer les emballages,
produire une image des emballages-coques et évaluer l'image,
munir chaque paroi latérale intérieure de la chambre d'éclairement (30) d'un condensateur réglable (32) émettant de la lumière, et
régler individuellement l'intensité lumineuse de chaque condensateur (32) émettant de la lumière.

2. Procédé selon la revendication 1, dans lequel les condensateurs (32) émettant de la lumière sont disposés sur les parois intérieures de la chambre (30) sous la forme de feuilles.

3. Procédé selon la revendication 1, dans lequel les parois sont sensiblement couvertes par des condensateurs (32) émettant de la lumière.

4. Procédé selon l'une quelconque des revendications précédentes, dans lequel le fond de la chambre (30) est muni d'un condensateur (32) émettant de la lumière.

5. Procédé selon l'une quelconque des revendications précédentes, dans lequel les emballages (10) sont amenés à passer de façon continue par une partie inférieure de la chambre (30).

6. Procédé selon la revendication 5, dans lequel les emballages (10) sont acheminés depuis un poste de remplissage (22, 24, 26) sur un trajet le long duquel sont disposés plusieurs postes de contrôle (23, 25, 27) comportant chacun une chambre d'éclairement (30).
